# EUROPEAN PATENT APPLICATION

(11) **EP 4 014 798 A1**
(43) Date of publication of application: **22.06.2022**
(21) Application number: 20214414.3
(22) Date of filing: 16.12.2020
(51) Int. Cl.: A47J 31/00, A47J 31/52

(54) **A COFFEE MACHINE AND A METHOD OF OPERATING A COFFEE MACHINE**

(71) Applicant: Koninklijke Philips N.V., 5656 AG Eindhoven (NL)
(72) Inventor: LOOPSTRA, Kasper Roelof, 5656 AE Eindhoven (NL)
(74) Representative: de Vries, Janna

(57) **Abstract**

A coffee machine has a test function, by which a user can instruct suitable operating settings to be determined, e.g. for a new coffee bean type to be used. A series of one or more test brewing cycles is then carried out to measure operating characteristics of the coffee machine, and thereby derive a set of suitable operating settings, for example for those new coffee beans.

## Description

### FIELD OF THE INVENTION

This invention relates to coffee machines, and in particular (but not exclusively) to fully automated bean-to cup espresso coffee machines.

### BACKGROUND OF THE INVENTION

An espresso coffee machine typically comprises a brewing chamber in which coffee grinds are provided, optionally prepackaged in a capsule, pod, or the like disposable cartridge. The machine passes pressurized hot water through the coffee grinds to create an espresso coffee drink.

A fully automatic (bean-to-cup) espresso machine further comprises a grinder, so that the machine performs the full function of coffee beans grinding and espresso drink formation.

There are various operating settings that can be adjusted to change the flavor of the resulting espresso beverage. Some of these parameters can be optimized based on the type of beans used in the appliance.

There are various known methods to detect the type of beans being used, such as infra-red spectroscopy on the whole bean or the ground bean, but these are often expensive and can be difficult to calibrate. In coffee shops and other retail outlets, baristas often take a new coffee bean and experiment with various settings on the grinder (coffee amount, grind fineness) and manual espresso appliance until the settings are believed to be optimal.

There is a need for an improved coffee machine which can determine the desired operating settings with minimal user expertise.

### SUMMARY OF THE INVENTION

The invention is defined by the claims.

According to examples in accordance with an aspect of the invention, there is provided a coffee machine comprising:
a water supply;
a water heater for heating water from the water supply;
a pump for pumping the heated water;
a brewing chamber for receiving coffee grinds and brewing coffee using hot water delivered by the pump;
a sensor arrangement for measuring operating characteristics of the coffee machine during the preparation of a coffee beverage;
a user interface for inputting user commands; and
a controller,
wherein the user interface is adapted to receive a user test command to determine suitable operating settings, and wherein the controller is adapted, in response to the user test command, to perform a series of one or more test brewing cycles to measure operating characteristics using the sensor arrangement, and thereby derive a set of suitable operating settings.

This coffee machine has a function which allows a user to instruct a test sequence. This involves performing one or more brews, but for a drink that is not for consumption. This enables operating settings to adjusted to be most suitable for gathering feedback information rather than for brewing a drink intended to be consumed. The feedback information primarily relates to operating characteristics of the coffee machine. Preferably, these operating characteristics are those that are sensed for the normal operation of the device (e.g. to provide feedback control loops or for safety sensing), for example pressure sensors, force sensors, temperature sensors, flow sensors, timing measurements performed by a processor, current measurements, voltage measurements, liquid level sensors, detection of switch settings etc. They relate to the operation of the coffee machine rather than to direct sensing of characteristics of the coffee grinds (or indeed coffee beans).

Thus, in one set of examples there is no direct analysis of the coffee grinds, coffee beans or coffee beverage.

The operating characteristics depend on the type of coffee being brewed, and so they enable the nature of the coffee to be determined. This enables the most suitable operating characteristics to be selected for future (non testing) brews. The mapping between the measured operating characteristics and the bean type for example involves comparing the operating characteristics with data in a database, and then mapping to the most suitable operating settings.

In another set of examples, there may additionally be a light gate or other sensor to detect the coffee beans. Indeed, some known machines include a sensor and actuator for the grind size. If there is an actuator for the grind size, this may be tuned when determining the bean behavior.

The user for example provides an input to the coffee machine that indicates he/she is using new coffee beans, and the machine can then perform the test brewing cycle or cycles. This makes it easier to ensure the operation of the coffee machine stays within desired operating windows.

The test brewing cycle or cycles may use less water and/or less coffee grinds than for a normal beverage so they do not waste large amounts of coffee or require a large volume of test results to be discharged. The test brewing cycle or cycles may take place at a different temperature to a normal brewing cycle.

Because it is known that a test run is being carried out on new beans, the coffee machine settings can be chosen deliberately to try to find the extreme values of the operating window. This may for example involve making a very, very weak coffee or an overly strong one, just to determine the operating window for the coffee machine.

The sensor arrangement may be for sensing a flow resistance or flow rate of heated water through the coffee grinds in the brewing chamber.

A flow sensor for measuring the amount of water pumped may be used for this purpose. A pressure sensor may also be used and/or the efficiency of the pump may be sensed.

The operating settings may comprise the water pressure or water flow rate to be delivered by the pump.

The coffee machine may comprise a bean grinder, wherein the brewing chamber is for receiving coffee grinds from the bean grinder.

The invention is of particular interest for a fully automatic coffee machine with integrated grinder, although it could also be applied to a coffee machine without grinder, so that the machine can reconfigure when a user switches to a different type of coffee grinds, or a capsule machine so that the machine can reconfigure to a particular capsule type.

The coffee machine for example comprises a waste bin for collecting coffee grinds after brewing.

Current sensing may for example be used to sense the force exerted by the grinder motor. A force measurement combined with the known grinding time may for example be used to indirectly detect the amount of coffee ground.

Current sensing may also take place for a motor associated with the brewing chamber (a brew unit motor), e.g. during opening and/or closing thereof, to indirectly measure the force exerted and/or receive information on appliance wear and tear.

The sensor arrangement may be for sensing:
characteristics of the energy supply to the bean grinder; and/or
a bean grind time.

The operating settings may then comprise the grind size to be provided and/or bean grinding time.

The coffee machine may comprise a tamping system for applying pressure to the coffee grinds in the brewing chamber. The tamping system is for example operated by the brew unit motor. Thus, the monitoring of the brew unit motor provides a way of sensing a tamping force or tamping stroke applied by the tamping system. The operating settings may then comprise the tamping force or tamping stroke applied by the tamping system, for example by the brew unit motor.

The controller may be adapted to determine a bean type or bean characteristics from the measured operating characteristics. The bean type of bean characteristics can then be mapped to desired operating settings.

The controller may be adapted to:
configure the coffee machine to the set of suitable operating settings automatically after the one or more test brewing cycles; and/or
output to a user the set of suitable operating settings to enable the user to adjust the settings of the coffee machine.

The adaptation of the settings may be automatic, or else in some instances the user may be required to adapt the settings. This avoids the need for the coffee machine to have the required automated adjustment mechanisms. For example, a low cost implementation of a fully automatic coffee machine may have manual control of the grind size.

The coffee machine may comprise a waste water bin, and a discharge system for discharging the results of the one or more test brewing cycles to the waste water bin.

This discharge may either be via an internal discharge mechanism, or via the dispense spout. This may be used to avoid the user having to collect and dispense with the unwanted test results. This collection may be visible or invisible to the user.

The invention also provides a method of operating a coffee machine, comprising:
receiving a user test command to determine suitable operating settings of the coffee machine;
in response to the user test command, performing a series of one or more test brewing cycles and measuring operating characteristics;
deriving from the operating characteristics a set of suitable operating settings,
wherein the operating characteristics comprise one of more of:
   a flow resistance or flow rate of heated water through coffee grinds in a brewing chamber;
   characteristics of an energy supply to a motor of a bean grinder;
   a bean grind time;
   characteristics of an energy supply to a brewing chamber motor;
   a tamping force or tamping stroke applied by a tamping system to coffee grinds in a brewing chamber, and
wherein the operating settings comprise one or more of:
   a water pressure or flow rate to be delivered by a pump to a brewing chamber;
   a grind size;
   a grind time;
   a tamping force or tamping stroke to be applied by a tamping system to coffee grinds in a brewing chamber;
   a back pressure between a brewing chamber and a delivery spout The method may comprise:
configuring the coffee machine to the set of suitable operating settings automatically after the one or more test brewing cycles; and/or
outputting to a user the set of suitable operating settings to enable the user to adjust the settings of the coffee machine.

The invention also provides a computer program comprising computer program code which is adapted, when said program is run on a computer, to implement the method defined above.

The computer program may be stored/distributed on a suitable medium, such as an optical storage medium or a solid-state medium supplied together with or as part of other hardware, but may also be distributed in other forms, such as via the Internet or other wired or wireless telecommunication systems.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figures 1A and 1B show a typical espresso machine; and
Figure 2 shows the internal parts of an espresso machine in accordance with the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a coffee machine which has a test function, by which a user can instruct suitable operating settings to be determined, e.g. for a new coffee type to be used. A series of one or more test brewing cycles is then carried out to measure operating characteristics of the coffee machine, and thereby derive a set of suitable operating settings, for example for that new coffee type.

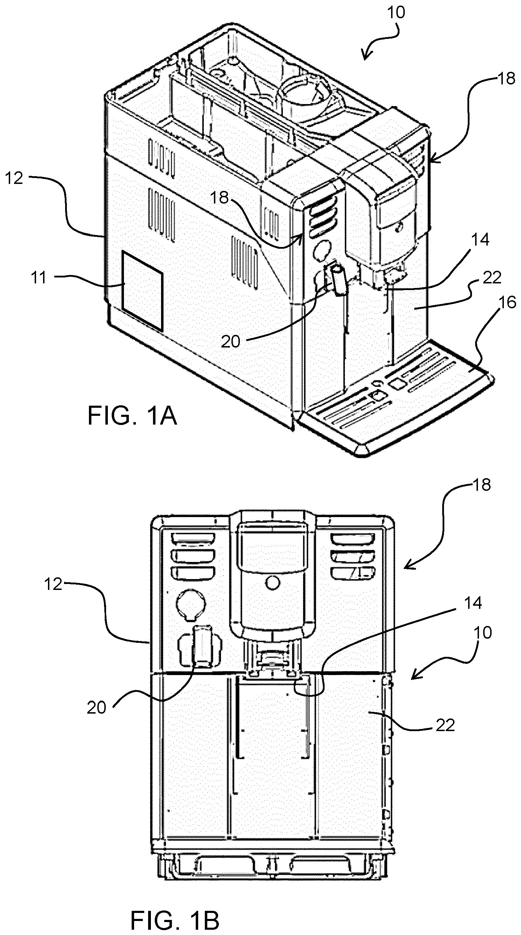

Figures 1A and 1B shows a drinks machine 10 in the form of an espresso coffee machine. Figure 1A shows a perspective view and Figure 1B shows a view from in front. The illustrated coffee machine is a bean-to-cup system.

It comprises a main body 12, which houses a water reservoir, a water heater and a reservoir for receiving coffee beans. There is an internal grinding mechanism for creating coffee grind, a brewing chamber or brew group for receiving the coffee grind, a pressurizing system for compressing the grinds, and a pumping system for pumping heated water through the (compressed) coffee grinds.

The machine comprises a dispense spout 14 from which the espresso drink is output, after the hot water has been pumped through the coffee grinds. The dispense spout 14 faces downwardly and is located over a drip tray 16. Figures 1A and 1B also show a user interface 18 for receiving user commands or selections, such as for water selection and for other drinks selections. There is also an external water delivery nozzle 20 for delivering water (or steam) from the pump which has not passed through the brewing chamber.

The user interface may be part of the coffee machine for receiving direct user commands. However, it may instead be a connection to another device, such as a mobile phone or tablet of the user, which communicates wirelessly with the user interface. Thus, the user interface may receive user commands directly or via an intermediary device.

The coffee machine has a waste bin 22, which in the illustrated embodiment may be accessed from the front of the machine, in the form of a pull-out drawer. After the brewing process, the used coffee grinds together with some excess water are discharged into the waste bin.

In addition to an espresso coffee mode for delivering coffee from the dispense spout 14, the output nozzle 20 may enable a hot water mode and/or a steam mode. Some of the drinks selections relate to drinks recipes which include hot and/or frothed milk and therefore require the generation of steam. For this purpose, steam may be provided from the output nozzle 20. There may also be an option for the generation of steam without being part of a drink selection, for example to enable the user to generate heated and/or frothed milk independently of any drink to be made by the machine.

The operation of the machine in generating an espresso coffee drink is entirely conventional, and the general operation of the coffee machine will not be described further.

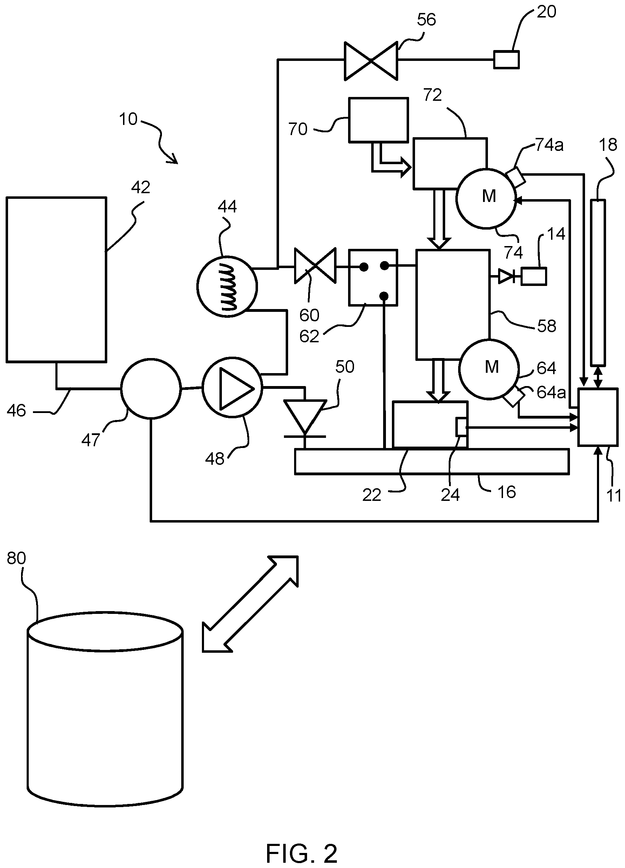

Figure 2 shows the internal components of a fully automatic espresso coffee machine, and in particular shows the fluid paths in the system as well as the user interface and the parts needed to implement the invention.

The coffee machine 10 comprises a water supply 42, a water heater 44 for heating water to generate hot water and optionally steam, and a pump 48 for pumping the heated water and steam. There is additionally a water dosing flow meter 47.

The pump delivers water to the heater 44. In addition, there may be an overpressure valve 50 from the heater to the drip tray 16 for collection or discharge of waste water.

The heated steam is provided to the output nozzle 20 through a first electronic valve 56.

The heated water is provided to a brewing chamber 58 through valve 60 and three-way valve 62. The three-way valve 62 allows water to be discharged to the drip tray 16 or waste bin 22, for example during cooling down of the heater, to bring the heater down from steaming temperatures to coffee brewing temperatures and to guarantee that the heater is completely filled with water instead of steam.

The brewing chamber 58 may be driven by a motor 64 for driving the brewing chamber between different positions, e.g. a coffee grinds receiving position and a coffee brew position. There is an associated sensor 64a for sensing the motor drive conditions, such as the current. The motor may also perform a tamping function, of applying a force to the coffee grinds in the brewing chamber by means of a tamping piston. Thus, monitoring the motor drive conditions may be used to measure indirectly a tamping force applied, and the stroke of the tamping piston can also be determined.

The illustrated coffee machine makes use of single heater 44 to selectively supply hot water of about 100°C for brewing coffee, steam of about 140°C (or more) for heating and/or frothing milk to the output nozzle 20, and water of about 90 degrees to the output nozzle 20 for other drink preparation (e.g. tea or hot chocolate), depending on the mode set by the user. When the machine is to prepare a milk-based recipe, e.g. a cappuccino, the heater 44 may first be heated up to about 140°C (or more) to supply steam to heat and/or froth milk. The heater may then be cooled down to about 100°C to provide hot water for brewing coffee. During the cooling down phase from 140 to 100°C, water coming from the heater may still be too hot for brewing coffee. This water is discharged as mentioned above to the drip tray (or to the waste bin, depending on the design of the machine). For a coffee drink which does not require hot and/or frothed milk, the heater may only be heated to 100°C and the brewing will then start without delay.

The dispense spout 14 may have an in-line crema valve that opens when the pressure in the brewing chamber 58 exceeds a certain value.

A bean reservoir 70 delivers beans to a bean grinder 72 having a grinder motor 74, and the ground beans are delivered to the brewing chamber 58. There is a sensor 74a for sensing the grinder motor driving conditions, such as the current.

An espresso coffee is typically made by forcing pressurized water to flow through a quantity of coffee grinds. During the espresso making process, the coffee grinds are compressed. To this end, the machine may for example comprise a tamping piston as mentioned above, which is movably arranged in the cylindrical brewing chamber, and which is capable of sealing an open top side of the brewing chamber.

Movement of the piston controls the extent of compression of the coffee grinds. When the coffee grinds are compressed more and more, a flow-through resistance of the coffee grinds increases. During an espresso making process, a brewing pressure at which the process is performed, i.e. a pressure at which the water is conducted through the coffee grind, is determined by the flow through resistance of the coffee grinds.

The brewing pressure is a determining factor for important characteristics of the espresso drink, including the taste, and the texture of a foam layer. The brewing pressure is thus for example controlled by varying a position of the piston and/or the water flow.

After coffee brewing, the used coffee grinds are discharged to the waste bin 22. The brewing chamber may be removably arranged in order to facilitate emptying and cleaning of the brewing chamber.

The waste bin 22 for example has a sensor 24 which enables detection of the removal of the waste bin from the main body of the coffee machine. There may be a switch (a push switch or a magnetically controlled switch such as a Hall sensor or any other contact or proximity sensor) which is activated when the waste bin drawer is inserted and/or when it is removed.

The coffee machine includes various other sensors, together forming a sensor arrangement, for measuring operating characteristics of the coffee machine during the preparation of a coffee beverage. These sensors enable the functions of the various components shown in Figure 2 to be monitored. They for example include:
the flow meter 47 for measuring a flow rate or determining a flow resistance of heated water through the coffee grinds in the brewing chamber 58 (for a given power applied to the pump). A pressure sensor may also be used and/or the efficiency of the pump may be sensed. Instead of a pressure sensor, a pressure may be estimated based on the flow meter reading;
current and/or voltage sensing of the energy supply to the motor 74 of the bean grinder 72 by sensor 74a. This may be used to derive a grinding force and thereby indirectly detect the amount of coffee ground per second;
a timing sensor, as part of the controller 11, for timing a bean grind time;
current and/or voltage sensing of the energy supply to the motor 64 of the brewing chamber by sensor 64a. This may enable indirect measurement of the tamping force;
a force sensor for (more directly) measuring a tamping force applied by the tamping system to coffee grinds in the brewing chamber;
a position sensor for measuring a tamping stroke applied by a tamping system to coffee grinds in the brewing chamber;
a temperature sensor for sensing the water temperature.

In accordance with the invention, the user interface 18 enables a user test command to be received, which instructs the coffee machine to determine suitable operating settings, in particular for a new coffee type, in this example, new coffee beans. The controller 11 then performs a series of one or more test brewing cycles to measure one or more of the operating characteristics explained above using the sensor arrangement, and thereby derive a set of suitable operating settings.

The test brewing cycle or cycles do not need to deliver a coffee that is acceptable to the user; they are not for consumption. Thus, the test brewing cycle or cycles may be performed with different operating settings, such as a smaller quantity of coffee grinds, different temperature, different tamping pressure, different tamping stroke, different flow rate etc., than would be used for a normal beverage preparation.

The purpose is to identify either the type of coffee bean or else characteristics of the coffee beans.

The bean characteristics for example include the bean hardness and the degree of roasting. It may also be possible to determine if the coffee is decaffeinated. It may also be possible to determine a bean size or possibly a measure of the oiliness of the beans.

By way of example, the bean hardness and roasting degree may be derived from the tamping force (for example derived from the brew unit motor current) and the grinder motor drive current. The flowrate through the coffee bed may enable determination of whether or not the coffee is decaffeinated. A test sequence thus involves applying a known set of operating settings and measuring the resulting operating characteristics.

The operating settings for example comprise one or more of:
a water pressure to be delivered by the pump 48 to the brewing chamber;
a grind size;
a tamping force or tamping stroke to be applied by a tamping system to coffee grinds in the brewing chamber;
a quantity of ground coffee to be delivered to the brewing chamber 58, for example implemented by the length of the grind time;
a quantity of water to be delivered to the brewing chamber 58.

The operating settings may also include different pumping patterns and brew phases such as a preset phase and a preset wait time.

Figure 2 shows a database 80 which stores a mapping between the measured operating characteristics and the bean characteristics or bean type. Thus, by applying a known test sequence and measuring the resulting operating characteristics, the bean characteristics may be obtained from a look up table or other database structure.

The database may be part of the coffee machine, or it may be remotely accessed, for example over the internet.

In one example, the operating characteristics which are sensed are those that are sensed for the normal operation of the device (e.g. to provide feedback control loops or for safety sensing). There are generally pressure sensors, force sensors, temperature sensors, flow sensors, timing sensors (e.g. by the controller 11), current sensors, voltage sensors, liquid level sensors, switch sensors etc. Thus, no sensors dedicated to the analysis of the coffee beans or coffee grinds are needed.

From the identified characteristics or bean types, the most suitable operating settings can be derived for future brews.

There may instead be an optical or other sensor to detect the coffee beans. Indeed, some known machines include a sensor and actuator for the grind size. If there is an actuator for the grind size, this may be tuned when determining the bean behavior.

The test brewing cycle or cycles may use less water and/or less coffee grinds than for a normal beverage so they do not waste large amounts of coffee or require a large volume of test results to be discharged. The test brewing cycles may take place at a different temperature to a normal brewing cycle. The test cycles involve adapting the brew settings so as to experiment with the new coffee beans, in order to find a pre-programmed optimum.

Once the suitable operating settings have been determined, the controller 11 may configure the coffee machine to the set of suitable operating settings automatically after the one or more test brewing cycles. Alternatively, the set of suitable operating settings may be output to the user, to enable the user to adjust the settings of the coffee machine. Some settings may be manually set such as a manual control of the grind size.

The waste created by the test cycle or cycles can be dispensed to the waste bin 22 and/or drip tray 16 by means of an internal discharge system or via the dispense spout 14 (so either visible or invisible to the user).

Another possible operating setting is a pressure drop downstream of the brewing chamber 58, for example implemented by a controllable valve between the brewing chamber and the dispense spout 14.

The benefit of using a test sequence arises primarily because a coffee grinder deposits different amounts of coffee to the brewing chamber for a given grinding time, depending on the type of coffee bean. Thus, if trying to deliver 8g of ground coffee, the same grind time can for instance yield anywhere between 4g and 12g depending in part on the coffee bean type. An amount of 4g will result in a very weak beverage, close to water, whereas 12g will give a very intense coffee and a lot of spilled coffee grounds in the appliance.

The amount that is ground depends primarily on the grinder setting but also on the coffee bean type, size and roast degree.

A test cycle for example involves grinding for a test time period, such as 10 seconds, with a new coffee bean. In a most simple implementation, the force is then determined that is required to compress the coffee by a given amount (i.e. a given stroke of the tamping piston). The tamping force is measured via the brew unit motor current. This then enables the bean type to be determined as described above, or enables a bean characteristic to be determined.

It is then possible to derive the grinding rate (grams/second) for the current grinder setting and bean type, and thereby determine quickly the appropriate grind time for the new bean type and grinder setting, to achieve a given desired coffee strength.

A single test cycle may suffice, or another test cycle may be performed, for example with different settings.

The knowledge of the bean type or bean characteristics may be used for controlling other settings (as outlined above), with the aim of optimizing the taste for the user.

The invention also provides a method of operating a coffee machine, comprising:
receiving a user test command to determine suitable operating settings of the coffee machine;
in response to the user test command, performing a series of one or more test brewing cycles and measuring operating characteristics;
deriving from the operating characteristics a set of suitable operating settings.

The possible measured operating characteristics, and controlled operating settings, are explained above.

The method is implemented in software, e.g. by software running on the controller 11.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A coffee machine comprising:
a water supply (42);
a water heater (44) for heating water from the water supply;
a pump (48) for pumping the heated water;
a brewing chamber (58) for receiving coffee grinds and brewing coffee using hot water delivered by the pump;
a sensor arrangement (47, 64a, 74a) for measuring operating characteristics of the coffee machine during the preparation of a coffee beverage;
a user interface (18) for inputting user commands; and
a controller (11),
wherein the user interface (18) is adapted to receive a user test command to determine suitable operating settings, and wherein the controller is adapted, in response to the user test command, to perform a series of one or more test brewing cycles to measure operating characteristics using the sensor arrangement, and thereby derive a set of suitable operating settings.

2. The coffee machine of claim 1, wherein the sensor arrangement is for sensing a flow resistance or flow rate of heated water through the coffee grinds in the brewing chamber.

3. The coffee machine of claim 1 or 2, wherein the operating settings comprise the water pressure or water flow rate to be delivered by the pump (48).

4. The coffee machine of any one of claims 1 to 3, comprising a bean grinder (72), wherein the brewing chamber (58) is for receiving coffee grinds from the bean grinder.

5. The coffee machine of claim 4, wherein the sensor arrangement is for sensing:
characteristics of the energy supply to the bean grinder (72); and/or
a bean grind time.

6. The coffee machine of claim 4 or 5, wherein the operating settings comprise grind size and/or bean grinding time.

7. The coffee machine of any one of claims 1 to 6, comprising a tamping system for applying pressure to the coffee grinds in the brewing chamber (58).

8. The coffee machine of claim 7, wherein the sensor arrangement is for sensing a tamping force or tamping stroke applied by the tamping system.

9. The coffee machine of claim 7 or 8, wherein the operating settings comprise the tamping force or tamping stroke applied by the tamping system.

10. The coffee machine of any one of claims 1 to 9, wherein the controller (11) is adapted to determine a bean type or bean characteristics from the measured operating characteristics.

11. The coffee machine of any one of claims 1 to 10, wherein the controller (11) is adapted to:
configure the coffee machine to the set of suitable operating settings automatically after the one or more test brewing cycles; and/or
output to a user the set of suitable operating settings to enable the user to adjust the settings of the coffee machine.

12. The coffee machine of any one of claims 1 to 11, comprising a waste water bin (22), and a discharge system for discharging the results of the one or more test brewing cycles to the waste water bin.

13. A method of operating a coffee machine, comprising:
receiving a user test command to determine suitable operating settings of the coffee machine;
in response to the user test command, performing a series of one or more test brewing cycles and measuring operating characteristics;
deriving from the operating characteristics a set of suitable operating settings,
wherein the operating characteristics comprise one of more of:
a flow resistance or flow rate of heated water through coffee grinds in a brewing chamber;
characteristics of an energy supply to a motor of a bean grinder;
a bean grind time;
characteristics of an energy supply to a brewing chamber motor;
a tamping force or tamping stroke applied by a tamping system to coffee grinds in a brewing chamber, and
wherein the operating settings comprise one or more of:
a water pressure or flow rate to be delivered by a pump to a brewing chamber;
a grind size;
a bean grind time;
a quantity of ground coffee to be delivered to the brewing chamber;
a quantity of water to be delivered to the brewing chamber;
a tamping force or tamping stroke to be applied by a tamping system to coffee grinds in a brewing chamber;
a back pressure between a brewing chamber and a delivery spout.

14. The method of claim 13, comprising:
configuring the coffee machine to the set of suitable operating settings automatically after the one or more test brewing cycles; and/or
outputting to a user the set of suitable operating settings to enable the user to adjust the settings of the coffee machine.

15. A computer program comprising computer program code which is adapted, when said program is run on a computer, to implement the method of claim 13 or 14 on the coffee machine of claims 1 to 12.
